# EUROPÄISCHE PATENTANMELDUNG

(11) **EP 3 339 028 A1**
(43) Veröffentlichungstag der Anmeldung: **27.06.2018**
(21) Anmeldenummer: 17170425.7
(22) Anmeldetag: 10.05.2017
(51) Int. Cl.: B32B 37/22, B32B 15/08, B65D 81/00

(54) **KOMPOSIT-FOLIE ALS VERPACKUNGSMATERIAL FÜR LEBENSMITTEL SOWIE VERFAHREN ZU DEREN HERSTELLUNG**

(30) Priorität: 22.12.2016 EP 16206078
(71) Anmelder: Sener, Numan, 88416 Ochsenhausen (DE); Alame, Mohamad, 88471 Laupheim (DE); Tauras, Rüdiger, 88400 Biberach (DE)
(72) Erfinder: Sener, Numan, 88416 Ochsenhausen (DE); Alame, Mohamad, 88471 Laupheim (DE); Tauras, Rüdiger, 88400 Biberach (DE)
(74) Vertreter: Kiessling, Christian

(57) **Zusammenfassung**

Bei einer Komposit-Folie (100) zur Bereitstellung eines Verpackungsmaterials für erwärmte Lebensmittel wie insbesondere Fastfood, ist eine Identifizierung eines verpackten individualisierten Produktes wie beispielsweise eines Hamburgers allein durch Augenschein ermöglicht durch eine für einen direkten Kontakt mit einem Lebensmittel vorgesehene metallische Basisfolie (110), auf die eine Kunststofffolie (120) aus einem wärmebeständigen Kunststoffmaterial fest aufgebracht ist.

## Beschreibung

Die Erfindung betrifft eine Komposit-Folien-Vorrichtung zur Bereitstellung eines Verpackungsmaterials für erwärmte Lebensmittel wie insbesondere Fastfood.

Die Erfindung betrifft des Weiteren ein Verfahren zum Herstellen einer Komposit-Folien-Vorrichtung zur Bereitstellung eines Verpackungsmaterials für erwärmte Lebensmittel wie insbesondere Fastfood.

Komposit-Folien-Vorrichtungen der eingangs genannten Art werden im Stand der Technik zur Verpackung unterschiedlichster Gegenstände verwendet. Die bekannten Komposit-Folien-Vorrichtungen weisen indes den Nachteil auf, dass eine Identifizierung des genauen Inhalts eines verpackten Gegenstandes mangels eines Erkennens des verpackten Gegenstandes nicht möglich ist.

Dieses Problem trifft bei Lebensmitteln insbesondere bei Fastfood-Produkten wie beispielsweise Hamburgern auf, da diese häufig nach Kundenwünschen mit verschiedensten Zutaten versehen individualisiert zubereitet werden, wobei eine a posteriori Identifizierung eines verpackten individualisierten Produktes durch Augenschein nicht mehr möglich ist.

Aufgabe der Erfindung ist es deshalb, eine Komposit-Folien-Vorrichtung sowie ein Verfahren zu deren Herstellung zu schaffen, mit deren Hilfe eine Identifizierung eines verpackten individualisierten Produktes wie beispielsweise eines Hamburgers allein durch Augenschein ermöglicht ist.

Für eine Komposit-Folien-Vorrichtung der eingangs genannten Art wird diese Aufgabe erfindungsgemäß gelöst durch eine für einen direkten Kontakt mit einem Lebensmittel vorgesehene metallische Basisfolie, auf die eine Kunststofffolie aus einem wärmebeständigen Kunststoffmaterial fest aufgebracht ist.

Für ein Verfahren der eingangs genannten Art wird diese Aufgabe erfindungsgemäß dadurch gelöst, dass die Basisfolie und die Kunststofffolie im Vorfeld einer Zusammenfügung zu einer Komposit-Folie von getrennten Spulenkörpern abgewickelt und einer Verbindungseinheit zugeführt werden, in der sie mittels mindestens zweier gegeneinander vorgespannten Rollen unter Druck zu einer Komposit-Folie zusammengefügt werden, die im Nachgang auf einen Dritten Spulenkörper aufgewickelt wird.

Bevorzugte Ausführungsformen der Erfindung sind Gegenstand der Unteransprüche der jeweiligen unabhängigen Patentansprüche, deren Elemente im Sinne einer weiteren Verbesserung des Lösungsansatzes der der Erfindung zugrunde gelegten Aufgabe wirken.

Bei der erfindungsgemäßen Komposit-Folien-Vorrichtung wird mit Hilfe des Merkmals des Vorsehens einer für einen direkten Kontakt mit einem Lebensmittel vorgesehene metallische Basisfolie, auf die eine Kunststofffolie aus einem wärmebeständigen Kunststoffmaterial fest aufgebracht ist, die Möglichkeit einer eindeutigen Identifizierbarkeit des von der Komposit-Folie verpackten Lebensmittels durch entsprechende Kennzeichnungen im Bereich der Außenfläche der grafisch deutlich besser als die Basisfolie gestaltbaren Kunststofffolie geschaffen.

Gemäß einer ersten bevorzugten Ausführungsform der erfindungsgemäßen Komposit-Folien-Vorrichtung ist vorgesehen, dass die Basisfolie aus Aluminium hergestellt ist.

Die Basisfolie weist vorzugsweise eine Dicke im Bereich von 0,001 mm bis 0,02 mm auf, insbesondere im Bereich von 0,003 mm bis 0,016 mm auf, wobei sich eine Dicke von etwa 0,009 mm als optimal erwiesen hat.

Gemäß einer anderen bevorzugten Ausführungsform der erfindungsgemäßen Komposit-Folien-Vorrichtung ist das wärmeresistente Kunststoffmaterial der Kunststofffolie von Polyethylen-Terephthalat (PET) gebildet.

Die Kunststofffolie weist dabei vorzugsweise eine Dicke im Bereich von 0,001 mm bis 0,02 mm auf, insbesondere im Bereich von 0,003 mm bis 0,012 mm auf, wobei sich eine Dicke von etwa 0,004 mm als optimal erwiesen hat.

Die Kunststofffolie ist dabei in der Regel mittels eines eine eigene Schicht geeigneter Dicke bildenden Bindemittels mit der Basisfolie verbunden.

Die Kunststofffolie ist für eine Identifizierung durch Augenschein eines verpackten Lebensmittels wie beispielsweise einem individualisiert zubereitetem Hamburger im Bereich der Außenfläche farblich gestaltet und dabei mit Zeichen wie Zahlen und/ oder Buchstaben versehen, die einen Hinweis auf die Art eines darin verpackten Lebensmittels geben.

Das wärmeresistente Kunststoffmaterial der Kunststofffolie ist vorzugsweise nicht fettlöslich, um dadurch einen beiderseitigen Austausch von chemischen Substanzen zwischen der Kunststofffolie und dem verpackten Lebensmittel sicher auszuschließen.

Gemäß einer ersten bevorzugten Ausführungsform des erfindungsgemäßen Verfahrens zur Herstellung einer Komposit-Folien-Vorrichtung ist vorgesehen, dass die Kunststofffolie im Vorfeld eines Eingangs in die Verbindungseinheit eine UV-Bestrahlungseinheit durchläuft.

Dabei sind vorzugsweise jeweils vor und hinter der UV-Bestrahlungseinheit der Kunststofffolie elastische vorgespannte Spannrollen vorgesehen, um eine gleichmäßige Führung der Kunststofffolie sicherzustellen.

Gemäß einer anderen bevorzugten Ausführungsform des erfindungsgemäßen Verfahrens zur Herstellung einer Komposit-Folien-Vorrichtung ist vorgesehen, dass ebenfalls die Basisfolie im Vorfeld eines Eingangs in die Verbindungseinheit eine UV-Bestrahlungseinheit durchläuft.

Auch dabei sind vorzugsweise jeweils vor und hinter der UV-Bestrahlungseinheit der Basisfolie elastische vorgespannte Spannrollen vorgesehen, um eine gleichmäßige Führung der Kunststofffolie sicherzustellen.

Gemäß einer wichtigen bevorzugten Ausführungsform des erfindungsgemäßen Verfahrens zur Herstellung einer Komposit-Folien-Vorrichtung wird im Vorfeld einer Zusammenfügung von Basisfolie und Kunststofffolie zu einer Komposit-Folie in einer Beschichtungseinheit auf mindestens eine der Folien ein Bindemittel aufgebracht, um eine robuste Haftung der Kunststofffolie auf der Basisfolie zu bewirken.

Das Bindemittel wird dabei vorzugsweise auf die chemisch inerte metallische Basisfolie aufgetragen.

Die erfindungsgemäße Komposit-Folien-Vorrichtung sowie das Verfahren zu deren Herstellung werden im Folgenden anhand bevorzugter Ausführungsformen erläutert, die in den Figuren der Zeichnung dargestellt sind. Darin zeigt:
- Fig.1: eine bevorzugte Ausführungsform der erfindungsgemäßen Komposit-Folien-Vorrichtung in einer Querschnittsansicht;
- Fig.2: die in Figur 1 dargestellte bevorzugte Ausführungsform der erfindungsgemäßen Komposit-Folien-Vorrichtung in einer Ansicht von oben;
- Fig.3: das erfindungsgemäße Verfahren zur Herstellung der in Figur 1 dargestellten Komposit-Folien-Vorrichtung in Form einer schematisierten Darstellung.

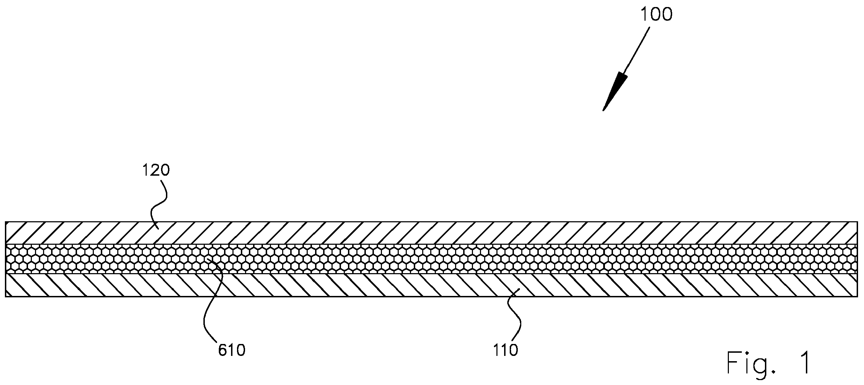

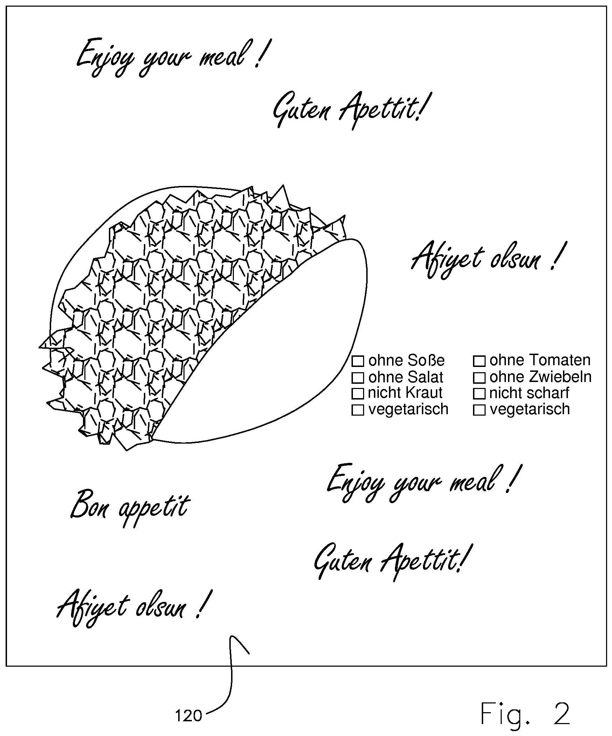

Die in den Figuren 1 und 2 dargestellte erfindungsgemäße Komposit-Folien-Vorrichtung 100 ist zur Bereitstellung eines Verpackungsmaterials für erwärmte Lebensmittel wie insbesondere Fastfood vorgesehen und enthält eine für einen direkten Kontakt mit einem Lebensmittel vorgesehene metallische Basisfolie 110, auf die eine Kunststofffolie 120 aus einem wärmebeständigen Kunststoffmaterial fest aufgebracht ist.

Die Basisfolie 110 ist aus Aluminium hergestellt und weist eine Dicke von etwa 0,009 mm auf.

Die Kunststofffolie 120 ist von Polyethylen-Terephthalat gebildet und weist eine Dicke von etwa 0,004 mm auf. Die Kunststofffolie 120 mittels ist eines Bindemittels 610 mit der Basisfolie 110 verbunden ist.

Das wärmeresistente Kunststoffmaterial der Kunststofffolie 120 ist nicht fettlöslich.

Die Kunststofffolie 120 ist im Bereich ihrer Außenfläche 121 mit Zahlen und Buchstaben versehen, die einen Hinweis auf die Art eines darin verpackten Lebensmittels geben.

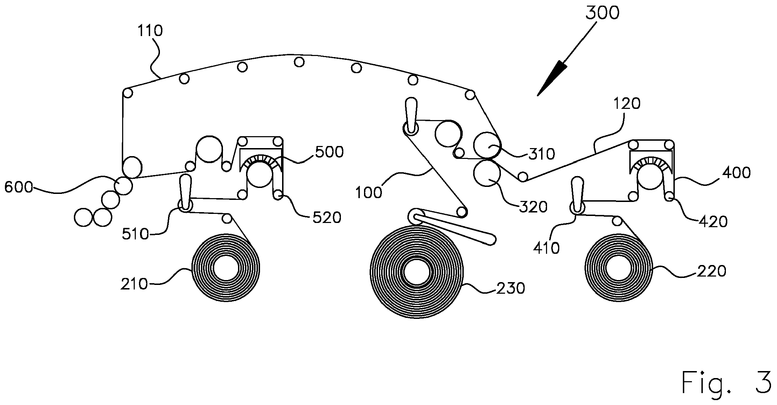

Bei dem in Figur 3 dargestellten erfindungsgemäßen Verfahren zur Herstellung einer Komposit-Folien-Vorrichtung 100 werden die Basisfolie 110 und die Kunststofffolie 120 im Vorfeld einer Zusammenfügung zu einer Komposit-Folie 100 von getrennten Spulenkörpern 210, 220 abgewickelt und im Nachgang einer Verbindungseinheit 300 zugeführt, in der sie mittels mindestens zweier gegeneinander vorgespannten Rollen 310 320 unter Druck zu einer Komposit-Folie 100 zusammengefügt werden, die im Nachgang auf einen Dritten Spulenkörper 230 aufgewickelt wird.

Die Kunststofffolie 120 durchläuft im Vorfeld eines Eingangs in die Verbindungseinheit 300 eine UV-Bestrahlungseinheit 400, wobei jeweils vor und hinter der UV-Bestrahlungseinheit 400 der Kunststofffolie 120 elastische vorgespannte Spannrollen 410, 420 vorgesehen sind, um eine gleichmäßige Führung der Kunststofffolie 120 sicherzustellen.

Die Basisfolie 110 durchläuft ebenfalls im Vorfeld eines Eingangs in die Verbindungseinheit 300 eine UV-Bestrahlungseinheit 500, wobei jeweils vor und hinter der UV-Bestrahlungseinheit 500 der Basisfolie 110 elastische vorgespannte Spannrollen 510, 520 vorgesehen sind, um eine gleichmäßige Führung der Kunststofffolie 120 sicherzustellen.

Im Vorfeld einer Zusammenfügung von Basisfolie 110 und Kunststofffolie 120 zu einer Komposit-Folie 100 in einer Beschichtungseinheit 600 wird auf die Basisfolie 110 ein Bindemittel aufgebracht, um eine robuste Haftung der Kunststofffolie 120 auf der Basisfolie 110 zu bewirken.

Die oben erläuterten Ausführungsbeispiele der Erfindung dienen lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

**1.** Komposit-Folien-Vorrichtung (100) zur Bereitstellung eines Verpackungsmaterials für erwärmte Lebensmittel wie insbesondere Fastfood, **gekennzeichnet durch** eine für einen direkten Kontakt mit einem Lebensmittel vorgesehene metallische Basisfolie (110), auf die eine Kunststofffolie (120) aus einem wärmebeständigen Kunststoffmaterial fest aufgebracht ist.

**2.** Komposit-Folien-Vorrichtung nach Anspruch 1, **dadurch gekennzeichnet, dass** die Basisfolie (110) aus Aluminium hergestellt ist.

**3.** Komposit-Folien-Vorrichtung nach einem der vorhergehenden Ansprüche, **dadurch gekennzeichnet, dass** die Basisfolie (110) eine Dicke im Bereich von 0,001 mm bis 0,02 mm aufweist.

**3.** Komposit-Folien-Vorrichtung nach einem der vorhergehenden Ansprüche, **dadurch gekennzeichnet, dass** die Basisfolie (110) eine Dicke im Bereich von 0,003 mm bis 0,016 mm aufweist.

**4.** Komposit-Folien-Vorrichtung nach Anspruch 3, **dadurch gekennzeichnet, dass** die Basisfolie (110) eine Dicke von etwa 0,009 mm aufweist.

**5.** Komposit-Folien-Vorrichtung nach einem der vorhergehenden Ansprüche, **dadurch gekennzeichnet, dass** das wärmeresistente Kunststoffmaterial der Kunststofffolie (120) nicht fettlöslich ist.

**6.** Komposit-Folien-Vorrichtung nach einem der vorhergehenden Ansprüche, **dadurch gekennzeichnet, dass** das wärmeresistente Kunststoffmaterial der Kunststofffolie (120) von Polyethylen gebildet ist.

**7.** Komposit-Folien-Vorrichtung nach Anspruch 6, **dadurch gekennzeichnet, dass** die Kunststofffolie (120) aus Polyethylen-Terephthalat (PET) eine Dicke im Bereich von 0,001 mm bis 0,02 mm aufweist.

**3.** Komposit-Folien-Vorrichtung nach einem der vorhergehenden Ansprüche, **dadurch gekennzeichnet, dass** die Kunststofffolie (120) eine Dicke im Bereich von 0,003 mm bis 0,012 mm aufweist.

**8.** Komposit-Folien-Vorrichtung nach Anspruch 6, **dadurch gekennzeichnet, dass** die Kunststofffolie (120) aus Polyethylen-Terephthalat (PET) eine Dicke von etwa 0,004 mm aufweist.

**9.** Komposit-Folien-Vorrichtung nach einem der vorhergehenden Ansprüche, **dadurch gekennzeichnet, dass** die Kunststofffolie (120) farblich gestaltet ist.

**10.** Komposit-Folien-Vorrichtung nach einem der vorhergehenden Ansprüche, **dadurch gekennzeichnet, dass** die Kunststofffolie (120) im Bereich ihrer Außenfläche (121) mit Zeichen versehen ist, die einen Hinweis auf die Art eines darin verpackten Lebensmittels geben.

**11.** Komposit-Folien-Vorrichtung nach einem der vorhergehenden Ansprüche, **dadurch gekennzeichnet, dass** die Kunststofffolie (120) im Bereich ihrer Außenfläche (121) mit Zahlen und/ oder Buchstaben bedruckt ist.

**12.** Komposit-Folien-Vorrichtung nach einem der vorhergehenden Ansprüche, **dadurch gekennzeichnet, dass** die Kunststofffolie (120) mittels eines Bindemittels (610) mit der Basisfolie (110) verbunden ist.

**13.** Verfahren zum Herstellen einer Komposit-Folien-Vorrichtung (100) gemäß einem der vorhergehenden Ansprüche, **dadurch gekennzeichnet, dass** die Basisfolie (110) und die Kunststofffolie (120) im Vorfeld einer Zusammenfügung zu einer Komposit-Folie (100) von getrennten Spulenkörpern (210, 220) abgewickelt und einer Verbindungseinheit (300) zugeführt werden, in der sie mittels mindestens zweier gegeneinander vorgespannten Rollen (310, 320) unter Druck zu einer Komposit-Folie (100) zusammengefügt werden, die im Nachgang auf einen dritten Spulenkörper (230) aufgewickelt wird.

**14.** Verfahren nach Anspruch 13, **dadurch gekennzeichnet, dass** die Kunststofffolie (120) im Vorfeld eines Eingangs in die Verbindungseinheit eine UV-Bestrahlungseinheit (400) durchläuft.

**15.** Verfahren nach Anspruch 14, **dadurch gekennzeichnet, dass** jeweils vor und hinter der UV-Bestrahlungseinheit (400) der Kunststofffolie (120) elastisch vorgespannte Spannrollen (410, 420) vorgesehen sind, um eine gleichmäßige Führung der Kunststofffolie (120) sicherzustellen.
